# EUROPEAN PATENT APPLICATION

(11) **EP 1 130 546 A1**
(43) Date of publication of application: **05.09.2001**
(21) Application number: 00301687.0
(22) Date of filing: 02.03.2000
(51) Int. Cl.: G06T 7/00

(54) **Cartoon recognition**

(71) Applicant: BRITISH TELECOMMUNICATIONS public limited company, London EC1A 7AJ (GB)
(72) Inventor: The designation of the inventor has not yet been filed
(74) Representative: Semos, Robert Ernest Vickers

(57) **Abstract**

A method of analysing a video signal for the presence of outlines to determine whether a frame of the video signal is likely to represent a cartoon is based on the concept that cartoons are often characterised by uniform colours within an image. In an improved version the signal is separated into signals representing smaller areas of the image before analysing each signal for the presence of uniform colours.

## Description

This invention relates to a method of and apparatus for determining whether an image, for example a frame of a video signal, represents a cartoon.

With the growing availability of online data, the provision of hundreds or even thousands of data channels by an information provider causes problems of content management and verification, as manual checking of every piece of data becomes infeasible. For image data, there is increasing interest in techniques for automated image interpretation and classification. Automated image interpretation and classification could help with indexing, cataloging and searching of still image and moving image databases.

Image interpretation and classification can be done either by the service provider or by the service receiver. For example, if it is possible to determine whether or not a signal represents a cartoon then means could be provided for parents to stop children from downloading pictures from the Internet or from watching TV programs other than cartoons. Other types of classifiers could prove useful, for example, classification of pornographic images or recognition of particular people.

According to the present invention there is provided a method of determining whether an image is likely to represent a cartoon, comprising the steps of analysing the image to provide at least one parameter relating to uniformity of colours in an image; and generating a likelihood value in dependence upon the value of said parameter.

Preferably the image comprises a plurality of pixels and the analysing step includes the sub-step of vector quantising the image so that each pixel corresponds to one of a plurality of codes each code having a representative value.

Preferably the vector quantising sub-step comprises sub-steps of dividing the image into a plurality of blocks, each block comprising a subset of pixels in the image; and independently vector quantising each block.

Preferably the analysing step further comprises calculating the number of times a pixel represented by one code occurs in an adjacent position in the image to a pixel represented by another code.

The analysing step may further comprise calculating a colourfulness value for a representative value for a code based on the hue and saturation values for said representative value for a code.

The analysing step may further comprise the sub-step of calculating the percentage of pixels corresponding to a one of the plurality of codes.

The analysing step may further comprise the sub-step of calculating the variance of the representative value for a code.

The analysing step may further comprise calculating a difference value between a representative value for one code and a representative value for another code.

According to another aspect of the invention there is also provided an apparatus for determining whether an image represents a cartoon comprising an analyser for analysing the image to provide one or more parameters wherein one parameter relates to uniformity of colours in the image; and a generator for generating a likelihood value in dependence upon the value of said one parameter.

Advantageously the analyser contains a vector quantiser.

Preferably the vector quantiser comprises a block signal generator for dividing the image into a plurality of block signals, each block signal representing a subset of pixels in the image; and a block signal vector quantiser.

Advantageously the analyser comprises a feature generator for calculating the number of times a pixel represented by one code occurs in an adjacent position in the image to a pixel represented by another code.

Advantageously the analyser comprises a feature generator for calculating a colourfulness value for a representative value for a code based on the hue and saturation value for said representative value for a code.

Advantageously the analyser comprises a feature generator for calculating the percentage of pixels corresponding to a one of the plurality of codes.

Advantageously the analyser comprises a feature generator for calculating the variance of the representative value for a code.

Advantageously the analyser comprises a feature generator for calculating a difference value between a representative value for one code and a representative value for another code.

An apparatus in accordance with the present invention, and its method of operation will now be described, by way of example only, with reference to the accompanying drawings in which:
Figure 1 is a schematic representation of a computer loaded with software and embodying the present invention;
Figure 2 shows red, blue, green and luminance components for a cartoon;
Figure 3 shows red, blue, green and luminance components for a photograph;
Figure 4 shows red, blue, green and luminance components for a complex cartoon;
Figure 5 is a flow chart showing method steps performed by the software indicated in Figure 1; and
Figure 6 is a functional block diagram of the program elements that comprise the software of Figure 1.

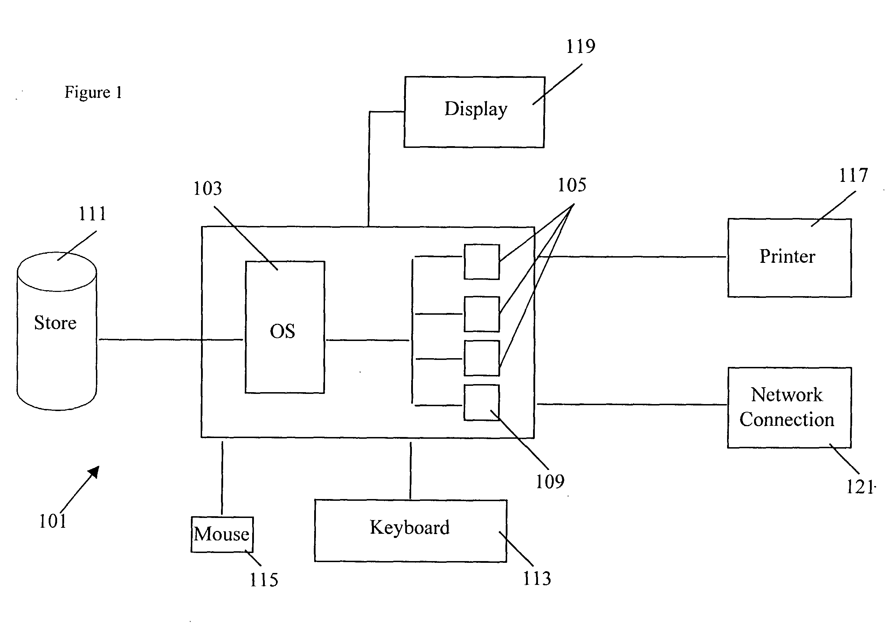

Figure 1 illustrates a conventional computer 101, such as a Personal Computer, generally referred to as a PC, running a conventional operating system 103, such as Windows (a Registered Trade Mark of Microsoft Corporation), and having a set of resident application programs 105 such as a word processing program, a network browser and e-mail program or a database management program. The computer 101 also includes an image classification program 109 that enables a signal representing an image to be classified according to whether or not the image represents a cartoon. The computer 101 is also connected to a conventional disc storage unit 111 for storing data and programs, a keyboard 113 and mouse 115 for allowing user input and a printer 117 and display unit 119 for providing output from the computer 101. The computer 101 also has access to external networks (not shown) via a network connection card 121.

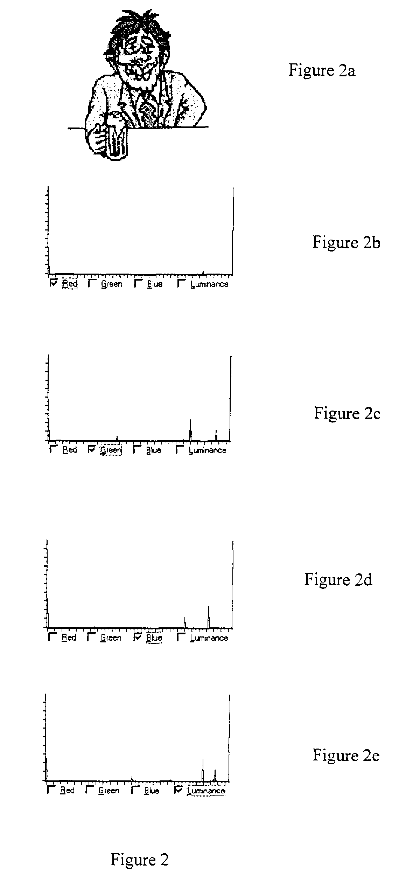

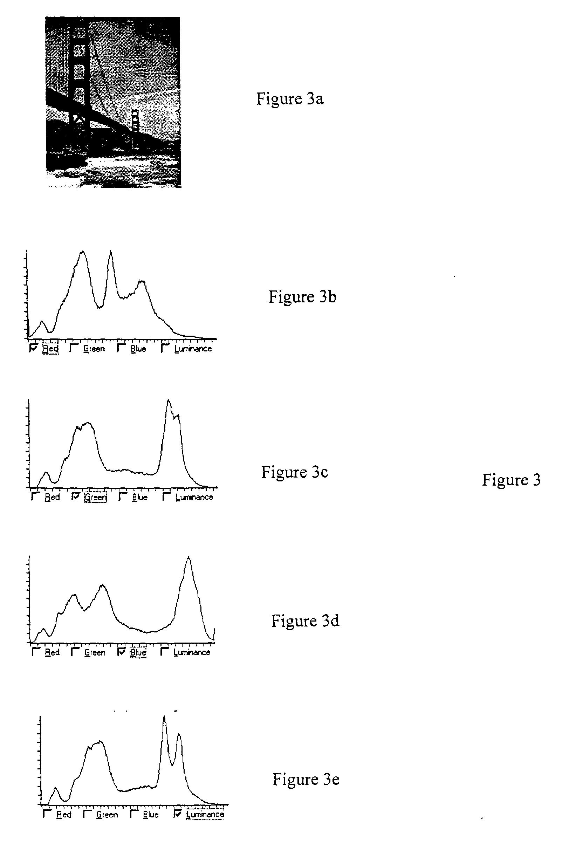

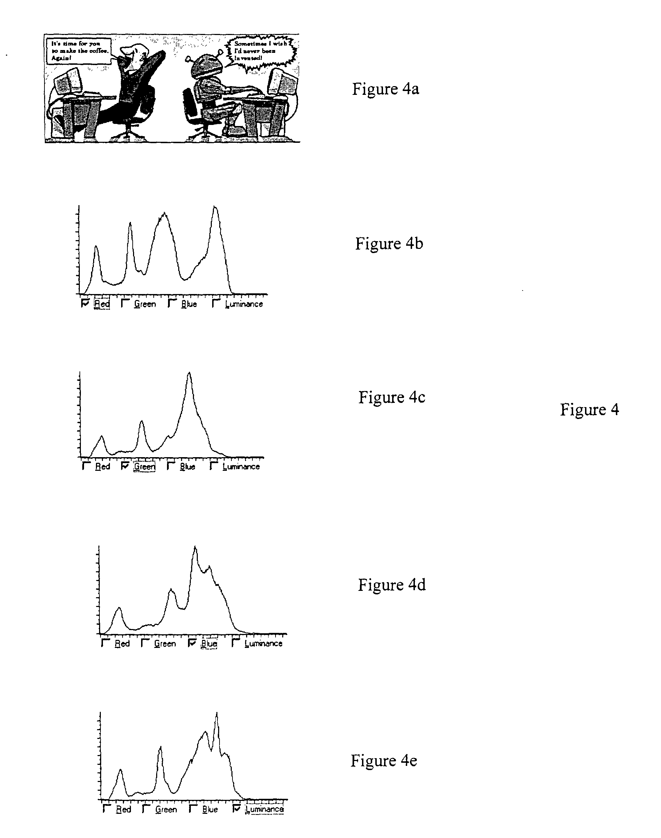

A simple image classification program for determining whether an image represents a cartoon can be implemented which analyses the colour distribution within the image. Figure 2a shows a cartoon (represented in a grey scale in the figure). Figure 2b is a histogram showing the number of pixels with particular values for the red component. Figures 2c, 2d and 2e show similar histograms for the green, blue and luminance components. For this cartoon there are prominent spikes in each component. Figure 3 shows a similar set of histograms for an image which is not a cartoon. The distribution for each component shows no such spikes. However, for a more complicated cartoon such as that shown in Figure 4, it is difficult to see any obvious distinction between the histograms of Figures 4b - 4e and those of Figures 3b - 3e.

However, if features can be extracted from the signal which are characteristic of cartoons then it should be possible to classify a signal using a neural network. Features which are characteristic of cartoons include strong dark outlines, almost no texture and locally constant colours. Also the image is 'colourful' - technically, then saturation and luminance components are relatively high if the colour is represented as Hue, Saturation and Luminance components. The lightness i.e. high values when colours are represented as Red, Green and Blue components may also be indicative of a cartoon. However, in cartoon fillms however these characteristic features may only be present for the foreground (i.e. for characters within the film) as each image may comprise a painted or illustrated background with a carton character superimposed thereon.

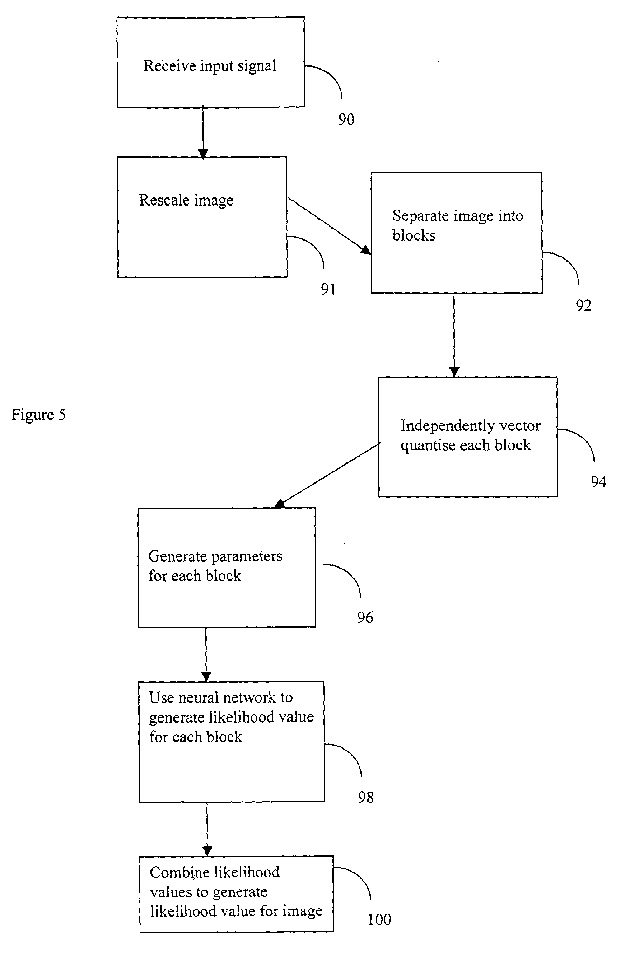

The operation of an apparatus of the invention employing a neural network, such as that described in "Practical Neural Network Recipes in C++" by Timothy Masters (ISBN 0-12-479040-2), will now be described with reference to Figure 5. At step 90 an input signal representing an image, for example a frame of video data, comprising a plurality of pixels is received. At step 91 the image represented by the received signal is rescaled to a predetermined size. The rescaling step 91 is not strictly necessary but it allows for more efficient computation for large images. At step 92 the image represented by the received signal is split into a plurality of block signals, each signal representing an area of the original image. Each block signal represents an area of the approximately the same size as the area represented by each other block signal. However, the areas represented by the block signals could equally well be different sizes from each other. The advantage of splitting the signal into blocks is that processing each block separately reduces the complexity of the task. However, it also means that 'global' features of the image are not taken into account. At step 94 each block signal is vector quantised into a predetermined number of levels. In this embodiment of the invention the signal is vector quantised into four levels using the well known LBG algorithm (as described in Linde, Y, Buzo, A and Gray, R. M. "An algorithm for vector quantizer design", IEEE Trans. Comm., vol. COM-28, Jan 1980, S 84-86). Each level (or code) is represented by a representative vector. The vector quantising step 94 serves to reduce the amount of data to be processed whilst retaining the important features of each block. At step 96 thirty nine parameters are calculated for each block from the vector quantised signal. The parameters are as follows:-

| Feature Description | Number of Parameters |
|---|---|
| Variance of pixel values assigned to each code | 4 |
| Geometric mean of variances for all the codes | 1 |
| Magnitude of each representative vector (representing the lightness of the vector) | 4 |
| Percentage of pixels values in a block assigned to each code | 4 |
| Colourfulness of each representative vector defined as Sin(π*L) * S S is the saturation, and L is the luminance of the representative vector | 4 |
| Difference between each pair of representative vectors | 6 |
| Average number of times pixels represented by each code occur adjacent to pixels represented by each other code | 16 |

The value for the variance of pixel values assigned to each code is likely to be characteristic of cartoon images because a cartoon is likely to have more uniform colours than an image which is not a cartoon. The percentage of pixel values in a block assigned to each code will provide an indication of the colour distribution within a block, and again relates the uniformity of colours in the block. The difference between each pair of representative vectors provides an indication of the range of colours within a block, a low range of colours indicating a greater uniformity. The average number of times pixels represented by each code occur adjacent to pixels represented by each other code gives an indication of the rate at which colours change over a block.

The colourfulness of each representative vector defined as Sin(π^{*}luminance) ^{*} saturation in this embodiment of the invention is likely to be greater for an image which is a cartoon. Similarly the lightness of an image is likely to be greater for a cartoon.

These thirty nine parameters are then used as inputs to a neural network classifier and a likelihood parameter is generated for each block at step 98, the likelihood parameter represents the probability that that block represents a cartoon. Other types of classifier could be used.

The likelihood parameters for each block are then combined to provide a likelihood value for the image at step 100 as follows. For each block, an error figure is calculated assuming the image is a cartoon, and an error figure is calculated assuming the image is not a cartoon. For example, assume a likelihood parameter with a value of 0.1 means that the image is probably a cartoon and a likelihood parameter with a value of 0.9 means that the image is probably a picture. If the generated likelihood parameter has a value of 0.4, then the error figure assuming the image is a cartoon is 0.9-0.4=0.5 and the error figure assuming the image is not a cartoon is 0.4-0.1 = 0.3. The error figures assuming the image is a cartoon are squared and summed for all the blocks contributing to the image. Similarly the error figures assuming the image is not a cartoon are squared and summed for all the blocks contributing to the image. The image is deemed to be of the type (i.e. either a cartoon or not a cartoon) with the smaller sum of mean squared errors.

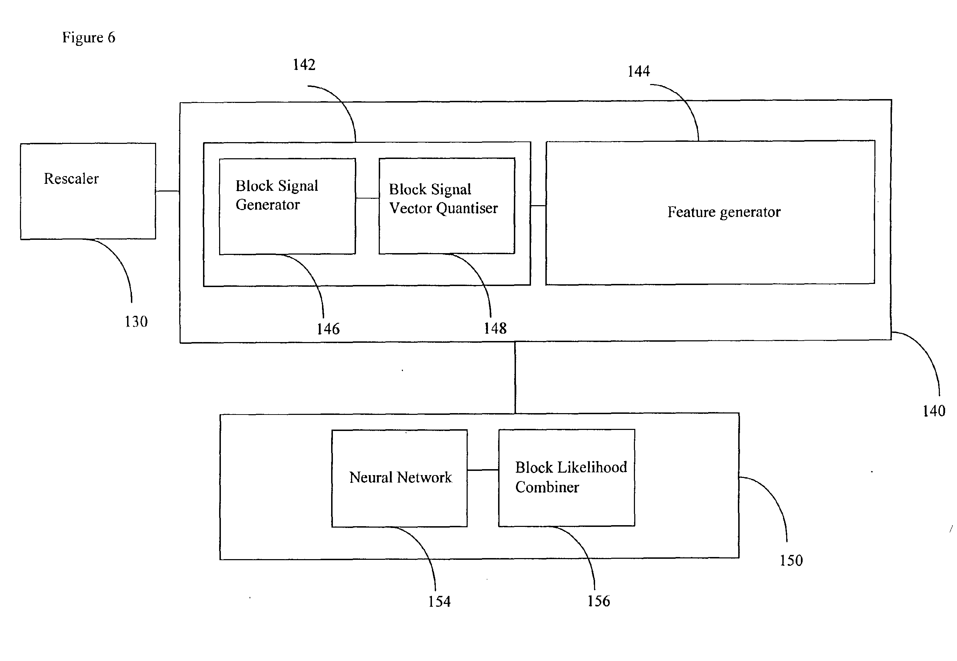

In Figure 6 there is shown a rescaler 130, an analyser 140 and a classifier 150. The rescaler 130 is coupled to the analyser 140 and is arranged to receive a signal representing an image. The analyser 140 comprises a vector quantiser 142 and a feature generator 144. The vector quantiser 142 comprises a block signal generator 146 which generates a plurality of block signals from the received rescaled signal, and a block signal vector quantiser 148 which generates a vector quantised block signal for each block signal received. The feature generator 144 generates a set of thirty nine parameters (as shown above) for each vector quantised block signal received. The classifier 150 comprises a neural network 154 which classifies each received set of thirty nine parameters to provide a block likelihood signal, and a block likelihood combiner 156.

The invention may be refined further for a sequence of related images, for example, a sequence of frames in a video signal. In a cartoon often the background is the same for a number of frames, and is often painted in a lot more detail than an image in the foreground (and thus is more similar to an image which is not a cartoon). The average background may be calculated using conventional techniques and the difference between the image and the average background can be used to weight the output likelihoods for each block prior to the combination step 100. Therefore blocks which are very similar to the average background are given little weight in the combining step 100. Blocks which are very different to the average background, and are likely to contain a foreground cartoon image are given more weight by the combining step 100.

As will be understood by those skilled in the art, the image classification program 109 can be contained on various transmission and/or storage mediums such as a floppy disc, CD-ROM, or magnetic tape so that the program can be loaded onto one or more general purpose computers or could be downloaded over a computer network using a suitable transmission medium.

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. A method of determining whether an image is likely to represent a cartoon, comprising the steps of
analysing the image to provide at least one parameter relating to uniformity of colours in an image; and
generating a likelihood value in dependence upon the value of said parameter.

2. A method according to claim 1, in which the image comprises a plurality of pixels and the analysing step includes the sub-step of vector quantising the image so that each pixel corresponds to one of a plurality of codes each code having a representative value.

3. A method according to claim 2, in which the vector quantising sub-step comprises sub-steps of
dividing the image into a plurality of blocks, each block comprising a subset of pixels in the image; and
independently vector quantising each block.

4. A method according to claim 2 or claim 3, in which the analysing step further comprises calculating the number of times a pixel represented by one code occurs in an adjacent position in the image to a pixel represented by another code.

5. A method according to any one of claims 2 to 4 which the analysing step further comprises calculating a colourfulness value for a representative value for a code based on the hue and saturation values for said representative value for a code.

6. A method according to any one of claims 2 to 5, in which the analysing step further comprises the sub-step of calculating the percentage of pixels corresponding to a one of the plurality of codes.

7. A method according to any one of claims 2 to 6, in which the analysing step further comprises the sub-step of calculating the variance of the representative value for a code.

8. A method according to any one of claims 2 to 7, in which the analysing step further comprises calculating a difference value between a representative value for one code and a representative value for another code.

9. An apparatus for determining whether an image represents a cartoon comprising
an analyser (140) for analysing the image to provide one or more parameters wherein one parameter relates to uniformity of colours in the image; and
a generator (150) for generating a likelihood value in dependence upon the value of said one parameter.

10. An apparatus according to claim 9, in which the analyser contains a vector quantiser (142).

11. An apparatus according to claim 10, in which the vector quantiser comprises
a block signal generator (146) for dividing the image into a plurality of block signals, each block signal representing a subset of pixels in the image; and
a block signal vector quantiser (148).

12. An apparatus according to claim 10 or claim 11, in which the analyser comprises a feature generator (144) for calculating the number of times a pixel represented by one code occurs in an adjacent position in the image to a pixel represented by another code.

13. An apparatus according to any one of claims 10 to12, in which the analyser comprises a feature generator (144) for calculating a colourfulness value for a representative value for a code based on the hue and saturation value for said representative value for a code.

14. An apparatus according to any one of claims 10 to 13, in which the analyser comprises a feature generator (144) for calculating the percentage of pixels corresponding to a one of the plurality of codes.

15. An apparatus according to any one of claims 10 to 14, in which the analyser comprises a feature generator (144) for calculating the variance of the representative value for a code.

16. An apparatus according to any one of claims 10 to 15, in which the analyser comprises a feature generator (144) for calculating a difference value between a representative value for one code and a representative value for another code.

17. A data carrier loadable into a computer and carrying instructions for causing the computer to carry out the method according to Claim 1.
